# DEMANDE DE BREVET EUROPEEN

(11) **EP 4 717 445 A1**
(43) Date de publication de la demande: **01.04.2026**
(21) Numéro de dépôt: 24203413.0
(22) Date de dépôt: 27.09.2024
(51) Int. Cl.: B29C 65/10, B29L 23/20

(54) **EMBALLAGE TUBULAIRE ET PROCÉDÉ DE FABRICATION**

(71) Demandeur: Aisapack Holding SA, 1896 Vouvry (CH)
(72) Inventeur: THOMASSET, Jacques, 74500 Neuvecelle (FR); COULON, Damien, 1853 Yvorne (CH)
(74) Mandataire: Grosfillier, Philippe

(57) **Abrégé**

Procédé de fabrication d'un emballage tubulaire par soudage d'un corps tubulaire (2) avec un composant (3), par ex. un bouchon ou un fond, ledit procédé comprenant les étapes suivantes:

A. Alimentation avec un composant (3);
B. Alimentation avec un corps tubulaire (2);
C. Chauffage (12) de l'interface à souder (14, 14') du composant (3) et du corps tubulaire (2);
D. Mise en position des zones à souder (14, 14');
E. Mise en pression (18) et refroidissement (19) de la soudure (21);

dans lequel procédé lors du chauffage de l'interface (14), on refroidit activement (11) la face externe (9) du corps tubulaire (2) lors de l'étape C, la couche en surface (9) du corps tubulaire (2) ne s'écoule pas lors de l'étape E et un bourrelet (22) de matière provenant du corps tubulaire (2) est formé à l'extrémité de la couche en surface (9).

## Description

### DOMAINE TECHNIQUE

L'invention se situe dans le domaine de la fabrication par soudage de tubes d'emballage flexibles comportant au moins un corps tubulaire flexible relié à un composant par soudage. Selon l'invention le composant est par exemple une tête de tube, un système d'ouverture fermeture ou une extrémité fermée comme un fond.

### ETAT DE LA TECHNIQUE

La publication EP2279072 décrit un système pour le soudage d'une tête de tube sur un corps tubulaire. Le système décrit comprend un mandrin sur lequel sont placés le corps tubulaire et la tête de tube qui sont destinés à être soudés l'un à l'autre. Pour effectuer le soudage, le système comprend d'une part des moyens de chauffage pour chauffer l'interface corps tubulaire / tête de tube à l'endroit où la soudure doit être effectuée et également des moyens de refroidissement. Ces moyens de refroidissement comprennent une bague de refroidissement qui s'applique sur l'extérieur du corps tubulaire et une bague d'isolation qui se trouve entre la bague de refroidissement et une bague de formage. Lors du procédé de soudage, l'extrémité du corps tubulaire est soumise d'une part à un chauffage sur sa partie interne destinée à être soudée à la tête de tube, à un refroidissement sur sa partie externe par la bague de refroidissement mais ce refroidissement ne s'applique pas à la partie du tube située au niveau de la bague d'isolation qui correspond au bout du corps tubulaire et cette partie est elle aussi chauffée.

### PRINCIPE DE L'INVENTION

Avec l'émergence d'emballages monomatières, allégés et contenant davantage de résine recyclée, la qualité esthétique de la soudure entre le corps tubulaire et du composant peut être dégradée. Dans le cadre de la présente invention, la notion de "monomatière" se comprend comme un emballage ou une partie d'emballage (comme par exemple un corps tubulaire) qui est essentiellement formée d'une même matière ou de matières de même type ou famille, typiquement de l'ordre de 95%. D'autre part avec l'apparition de bouchons plus légers, bon nombre de bouchons ne cachent plus la zone de soudure ce qui rend plus critique le moindre défaut esthétique dans cette zone.

L'invention a pour objectif de remédier aux défauts d'assemblage par soudage d'un composant avec un corps tubulaire formé notamment par extrusion, par extrusion étiquetage (voir les publications WO2015159234 et WO2018051235) ou par injection. Ces corps tubulaires tendent à se déformer quand on les chauffe à cause de contraintes internes créées lors de leur fabrication ce qui pose problème lors de leur soudage à un composant.

Les défauts les plus fréquents qui peuvent apparaitre au niveau de la soudure entre le composant et le corps tubulaire sont les suivants notamment en utilisant le procédé et le système décrits dans la publication EP2279072 mentionnée ci-dessus:
- Défaut sous forme de pli ou strie
- Défaut lié à la dégradation de l'impression
- Défaut de retournement de la jupe

Il existe donc un besoin d'améliorer la qualité notamment esthétique des soudures entre le composant et le corps tubulaire et un objectif de l'invention est de proposer un procédé et des moyens de soudage permettant de remédier à ces défauts pour obtenir des emballages ayant des caractéristiques de soudure améliorées.

Un but de l'invention est de proposer un procédé de soudage permettant d'améliorer la qualité de l'assemblage par soudage des tubes d'emballage flexibles comportant au moins un corps tubulaire flexible et un composant pouvant être, par exemple, une tête de tube, un système d'ouverture fermeture ou une extrémité fermée comme un fond. Ces tubes sont destinés notamment mais non-exclusivement au conditionnement de produits liquides ou visqueux, semi-liquides ou solides (par exemple sous forme de poudre).

L'invention porte sur un procédé de soudage mis en oeuvre sur une tourelle rotative indexée permettant la fabrication d'emballages à grande cadence de production.

Un but de l'invention est de proposer un procédé qui améliore l'esthétique de la soudure qui relie le composant à des corps tubulaires recyclables dit « monomatière » (soit formés essentiellement de la même matières ou famille de matières) et/ou de plus faible épaisseur.

Un autre but de l'invention est de proposer un procédé qui améliore l'esthétique de la soudure qui relie le composant à des corps tubulaires comportant des matières recyclées ou/et biosourcées ou/et biodégradables.

Un autre but de l'invention est de proposer un procédé qui améliore l'esthétique de la soudure lorsque le corps tubulaire est imprimé dans la zone de soudure.

Un autre but de l'invention est de proposer un procédé qui améliore l'esthétique de la soudure lorsque cette dernière n'est pas cachée par un bouchon.

Un autre but de l'invention est de proposer un procédé de soudage acceptant des corps tubulaires ayant des réactions différentes lors du soudage, ces réactions découlant des procédés différents utilisés pour fabriquer lesdits tubes. Le procédé de soudage selon l'invention permet en particulier d'assembler des corps tubulaires fabriqués par extrusion ou par extrusion-étiquetage (voir par exemple les publications WO2015159234 et WO2018051235) ou encore par injection de résine dans un moule.

Dans des modes d'exécution, l'invention propose un procédé de soudage qui améliore l'esthétique de la soudure grâce à un gradient thermique maitrisé dans l'épaisseur du corps tubulaire lors de l'opération de soudage.

Dans des modes d'exécution, l'invention propose un procédé de soudage qui améliore l'esthétique de la soudure en refroidissant activement le corps tubulaire sur sa face externe conjointement au chauffage de l'interface à souder.

Dans des modes d'exécution, l'invention propose un procédé de soudage qui améliore l'esthétique de la soudure en refroidissant activement la face externe du corps tubulaire pendant la mise en contact des zones à souder.

Dans des modes d'exécution, l'invention propose un procédé de soudage qui améliore l'esthétique de la soudure en refroidissant activement la surface externe du corps tubulaire pour empêcher sa déformation pendant la mise en pression de la zone à souder.

Dans des modes d'exécution, l'invention propose un procédé qui lors de l'étape de mise en pression de la soudure crée une déformation et un écoulement ciblés de la matière dans la zone de soudure permettant la compression de la soudure sans pour autant dégrader l'aspect esthétique de la couche formant la surface externe de la soudure. Selon le procédé, au moins la couche du corps tubulaire formant la surface externe ne s'écoule pas lors de la mise en pression.

Dans des modes d'exécution de l'invention, le procédé de compression de la soudure crée un écoulement de matière fondue ayant pour effet de réduire l'épaisseur du corps tubulaire au niveau de la soudure et de créer un bourrelet de matière à l'extrémité du corps tubulaire, ledit bourrelet étant constitué de matière du corps tubulaire située sous la surface externe.

Dans des modes d'exécution de l'invention, le procédé de soudage encastre au moins en partie le bourrelet de matière au niveau de l'extrémité de la soudure, améliorant ainsi la continuité de la surface externe de l'emballage. Ainsi, selon des modes d'exécution de l'invention, au moins 60% du bourrelet est encastré et de préférence au moins 80% du bourrelet est encastré. Bien entendu, ce sont des valeurs indicatives et d'autres valeurs sont possibles dans le cadre de la présente invention.

Dans des modes d'exécution, l'invention concerne un procédé de fabrication d'un emballage tubulaire par soudage de l'extrémité d'un corps tubulaire avec un composant, ledit composant pouvant être une épaule, un système de fermeture (comme un bouchon), ou un fond, ledit procédé comprenant au moins les étapes suivantes:
A. Alimentation avec un composant;
B. Alimentation avec un corps tubulaire;
C. Chauffage de l'interface à souder du composant et du corps tubulaire;
D. Mise en position des zones à souder;
E. Mise en pression et refroidissement de la soudure;

ledit procédé étant caractérisé par le fait que
au moins lors du chauffage de l'interface, on refroidit activement la face externe de la zone à souder du corps tubulaire de sorte que
un gradient thermique est créé dans l'épaisseur du corps tubulaire lors de l'étape C ;
la couche en surface du corps tubulaire ne s'écoule pas lors de l'étape E et un bourrelet de matière provenant du corps tubulaire est formé à l'extrémité de la couche en surface,
ledit bourrelet étant encastré et présent en surface de la soudure.

Dans des modes d'exécution, au moins le corps tubulaire est fabriqué par extrusion, extrusion-étiquetage ou injection.

Dans des modes d'exécution, on refroidit activement la face externe de la zone à souder du corps tubulaire pendant l'étape D de mise en position des zones à souder pour maintenir un gradient thermique dans l'épaisseur du corps tubulaire et éviter la création de défauts dans la couche externe du corps tubulaire.

Dans des modes d'exécution, on refroidit activement la face externe de la zone à souder du corps tubulaire pendant l'étape E de mise en pression de la soudure pour maintenir un gradient thermique dans l'épaisseur du corps tubulaire et éviter la déformation de la couche externe du corps tubulaire.

Dans des modes d'exécution, on refroidit activement la face externe de la zone à souder du corps tubulaire après l'étape F de mise en pression de la soudure.

Dans des modes d'exécution, la mise en position comprend le rabat de l'extrémité chauffée du corps tubulaire contre le composant au moyen d'une surface de formage ayant un angle de formage compris entre 0 et 85 degrés.

Dans des modes d'exécution, la surface de formage présente au moins une partie dite linéaire dans laquelle l'angle de formage est constant et est compris entre 35 et 85 degrés.

Dans des modes d'exécution, la surface linéaire représente au moins 5% de la surface de formage.

Dans des modes d'exécution, l'invention concerne un emballage comprenant au moins un corps tubulaire et un composant, ledit composant pouvant être une épaule de tube ou un fond ou un système de fermeture (comme un bouchon), l'extrémité du corps tubulaire étant reliée par une soudure à la périphérie du composant, dans lequel la soudure:
- présente un bourrelet situé à l'extrémité de la couche externe du corps tubulaire et formé de matière(s) provenant des couches du corps tubulaire situées sous ladite couche externe
- le bourrelet est au moins en partie encastré.

Dans des modes d'exécution, au moins le corps tubulaire est formé par extrusion, extrusion-étiquetage ou injection.

Dans des modes d'exécution, plus de 60% de l'épaisseur du bourrelet est encastrée.

Dans des modes d'exécution, l'épaisseur du corps tubulaire est comprimée localement au niveau de la soudure, au moins de 1% et de préférence au moins de 5%.

Dans des modes d'exécution, la surface externe de la soudure comprend un angle de soudage variable, l'angle de soudage étant observé dans un plan contenant l'axe du corps tubulaire, ledit angle de soudage étant défini par l'angle entre l'axe du corps tubulaire et la tangente à la surface externe de la soudure.

Dans des modes d'exécution, l'angle de soudage est compris entre 0 et environ 85 degrés.

Dans des modes d'exécution, la surface externe de la soudure présente au moins une partie dite linéaire dans laquelle l'angle de soudage est constant et est compris entre 35 et 85 degrés.

Dans des modes d'exécution, la surface linéaire représente au moins 5% de la surface soudée.

Dans des modes d'exécution, la longueur du bourrelet visible en surface est supérieure à 1% et de la longueur de soudure.

Dans des modes d'exécution, le bourrelet est en surface sur toute la circonférence de la soudure.

Dans des modes d'exécution, la couleur du bourrelet est identique à la couleur du composant et/ou identique à la couleur de la couche externe du corps tubulaire afin de le rendre difficilement visible à l'oeil nu.

Dans des modes d'exécution, l'épaisseur du corps tubulaire est inférieure à 450 microns.

Dans des modes d'exécution, le corps tubulaire ou/et le composant comprend (comprennent) de la matière recyclée ou/et biodégradable et ou biosourcée.

Dans des modes d'exécution, le taux de matière recyclée ou/et biodégradable et ou biosourcée est supérieur à 10% et avantageusement supérieur à 30%.

Dans des modes d'exécution, l'invention concerne un dispositif pour la mise en oeuvre du procédé selon l'invention, ledit dispositif comprenant au moins des moyens comme une buse pour appliquer de l'air chaud contre la paroi interne du corps tubulaire et la paroi externe du composant sur les zones à souder formant une interface chauffée et des moyens, comme un guide refroidi par des moyens appropriés, pour refroidir activement la paroi externe de la zone à souder du corps tubulaire.

Dans des modes d'exécution, le dispositif comprend des moyens de mise en contact des zones à souder.

Dans des modes d'exécution, lesdits moyens de mise en contact comprennent des moyens de refroidissement.

Dans des modes d'exécution, les moyens de mise en contact comprennent au moins une bague de formage avec une surface de formage et une surface linéaire de formage.

Dans des modes d'exécution, le dispositif comprend des moyens de mise en pression de la soudure.

Dans des modes d'exécution, lesdits moyens de mise en pression comprennent des moyens de refroidissement.

### BREVE DESCRIPTION DES DESSINS

La figure 1 illustre un exemple d'emballage tubulaire réalisé selon l'invention.
La figure 2 illustre un exemple de dispositif indexé pour réaliser l'assemblage d'un corps tubulaire et d'un composant.
La figure 3 illustre un mode d'exécution d'un procédé de fabrication selon l'invention.
La figure 4 illustre un mode d'exécution d'un dispositif permettant de créer un gradient thermique dans l'épaisseur du corps tubulaire pendant l'opération de chauffage de l'interface à souder (étape C).
La figure 5 illustre un mode d'exécution d'un dispositif permettant de rabattre l'extrémité chauffée du corps tubulaire sans dégrader la surface externe de la soudure (étape D).
La figure 6 illustre la soudure d'un corps tubulaire et d'un composant selon l'invention.
Les figures 7 et 8 illustrent des images au microscope de soudures réalisées selon l'invention.

### DESCRIPTION DETAILLEE

- 1 :: emballage tubulaire
- 2 :: corps tubulaire, par exemple fabriqué par extrusion, extrusion-étiquetage ou injection
- 3 :: composant
- 4 :: soudure
- 5 :: zone d'assemblage
- 6 :: tourelle indexée
- 7 :: mandrins
- 8 :: stations
- 9 :: couche externe du corps tubulaire
- 10 :: guide refroidi
- 11 :: moyens de refroidissement du guide refroidi
- 12 :: buse d'air chaud
- 13 :: air chaud
- 14 :: interface chauffée du corps tubulaire
- 14':: interface chauffée du composant
- 15 :: surface refroidie du corps tubulaire
- 16 :: surface chauffée du corps tubulaire
- 17 :: escalier
- 18 :: bague de formage
- 19 :: moyens de refroidissement de la bague de formage
- 20 :: surface linéaire de la soudure
- 21 :: surface soudée
- 22: : bourrelet
- 23 :: épaisseur du corps tubulaire dans la zone conique
- 24 :: épaisseur du corps tubulaire
- 25 :: couches internes du corps tubulaire
- 26 :: surépaisseur du bourrelet
- 27 :: longueur du bourrelet
- 28 :: axe du corps tubulaire
- 29 :: angle de formage
- 30 :: surface de formage
- 31 :: surface linéaire de formage
- 32 :: angle de soudage

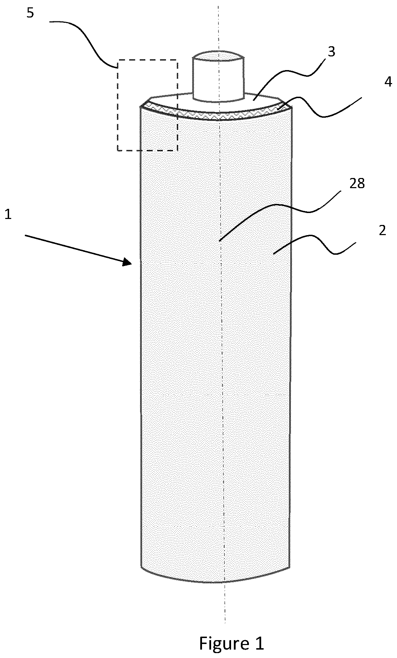

La figure 1 illustre un exemple d'emballage tubulaire 1 réalisé selon l'invention comportant au moins un corps tubulaire 2 dont une extrémité au moins est liée par soudage à un composant 3. La soudure est référencée "4" et l'axe du corps tubulaire est référencé "28".

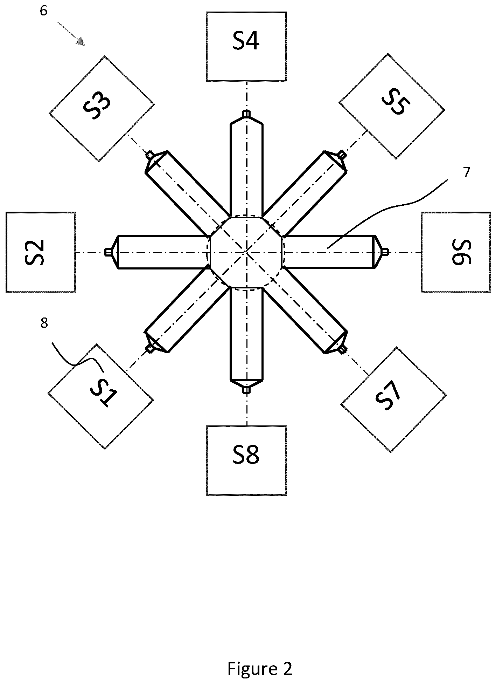

La figure 2 illustre un exemple d'un dispositif permettant de réaliser l'assemblage du corps tubulaire 2 et du composant 3. Le dispositif comprend notamment une tourelle indexée 6, des mandrins 7 et des stations 8. De tels dispositifs sont par exemple décrits dans les publications EP2021156 et EP3016790 données à titre illustratif.

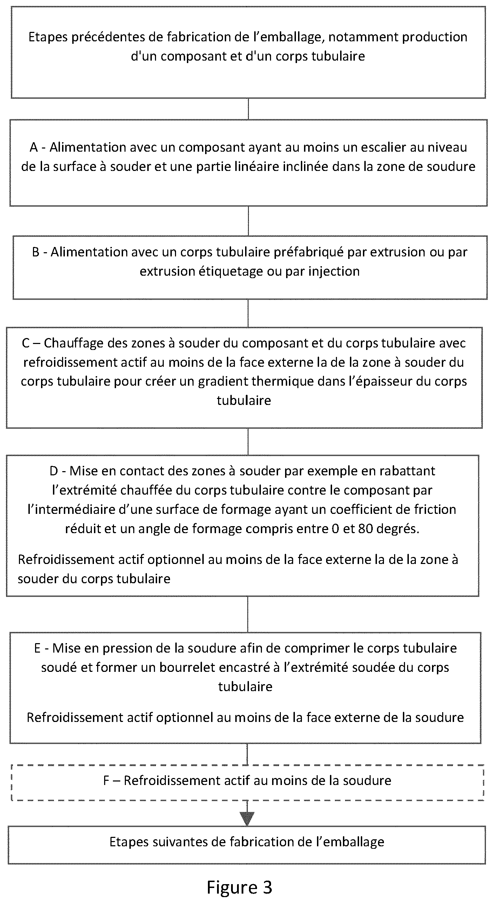

Selon des modes d'exécution de l'invention et l'exemple illustré dans la figure 3, le procédé de soudage d'un corps tubulaire et d'un composant, comprend au moins les étapes suivantes :
A. Alimentation avec un composant ayant une surface à souder formée au moins d'un escalier et d'une partie linéaire inclinée;
B. Alimentation avec un corps tubulaire;
C. Chauffage des zones à souder du composant et du corps tubulaire en refroidissant activement au moins la face externe de la zone à souder du corps tubulaire;
D. Mise en position des zones à souder, par exemple en rabattant l'extrémité chauffée du corps tubulaire contre le composant par l'intermédiaire d'une surface de formage ayant un coefficient de friction réduit et un angle de formage compris entre 0 et 80 degrés; optionnellement refroidissement actif au moins la face externe de la zone à souder du corps tubulaire;
E. Mise en pression des zones à souder afin de comprimer la zone à souder du corps tubulaire en empêchant la déformation de la couche externe du corps tubulaire et en formant un bourrelet encastré à l'extrémité soudée du corps tubulaire;
optionnellement refroidissement actif au moins la face externe de la soudure.

De préférence, au moins le corps tubulaire est fabriqué par extrusion, extrusion étiquetage ou injection.

Les étapes optionnelles de refroidissement actif mentionnées peuvent exécutées avant et/ou pendant et/ou après les étapes D de mise en position et E de mise en pression, par exemple lors de l'indexage si ces étapes sont effectuées dans différentes stations.

Dans un mode d'exécution, on peut effectuer une étape de refroidissement actif optionnelle supplémentaire (Etape F dans la figure 3) après la mise en pression. Les étapes de refroidissements peuvent se faire avec de l'air par exemple ou avec d'autres moyens comme décrit dans la présente demande ou d'autres moyens équivalents.

Finalement, le produit obtenu subit d'autres étapes de fabrication de l'emballage, comme décrit par exemple dans les publications EP2021156 et EP3016790 données à titre illustratif.

### Etape C :

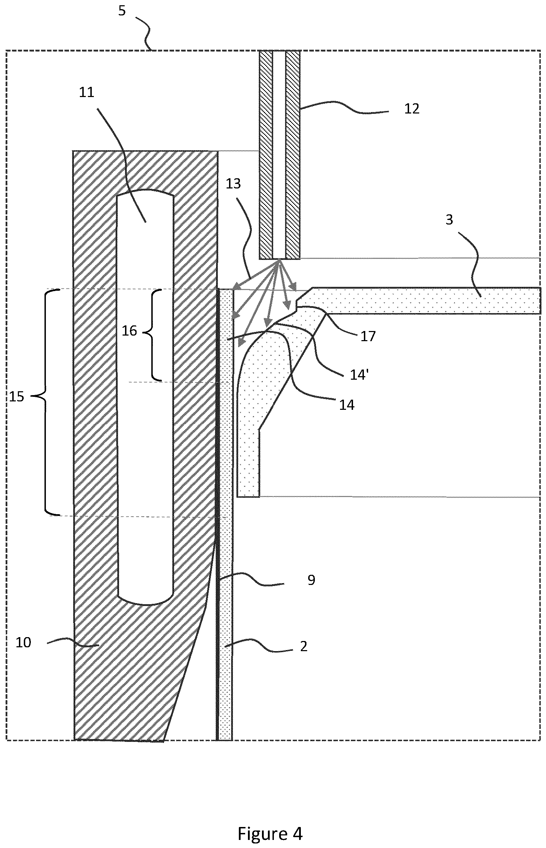

Un mode d'exécution illustratif des moyens utilisés pour réaliser l'étape C est représenté dans la figure 4. Les figures 4 à 8 illustrent des coupes dans un plan contenant l'axe 28 du corps tubulaire.

Comme illustré dans cette figure, des buses d'air chaud 12 sont utilisées pour appliquer un jet d'air chaud 13 contre la paroi interne du corps tubulaire 2 et la paroi externe du composant 3 sur les zones à souder formant une interface chauffée 14.

Selon des modes d'exécution de l'invention, au moins l'extrémité à souder du corps tubulaire 2 a une épaisseur supérieure à celle de l'escalier 17 du composant 3. De préférence le rapport entre l'épaisseur du corps tubulaire 2 et celle de l'escalier 17 est compris entre 1,01 et 1,2 et de préférence entre 1,03 et 1,1.

Selon des modes d'exécution de l'invention, le refroidissement actif dans l'étape C est réalisé par contact de la surface externe 15 du corps tubulaire 2 contre un guide refroidi 10. Le guide refroidi 10 est refroidi, par exemple, par un circuit d'eau thermorégulée 11.

Selon des modes d'exécution de l'invention, le guide refroidi 10 activement a un coefficient de conductivité thermique supérieure à 8W/(m.°K) et de préférence supérieure à 13.

Selon des modes d'exécution de l'invention, la distance entre le circuit de refroidissement 11 et la surface du corps tubulaire 2 est inférieure à 20 mm, de préférence inférieure à 10 mm et avantageusement inférieure à 5mm.

Selon des modes d'exécution de l'invention, la surface du guide refroidi 10 en contact avec le corps tubulaire 2 a par exemple une géométrie tubulaire de diamètre légèrement inférieur à celui du corps tubulaire 2.

Selon d'autres modes d'exécution de l'invention, la surface du guide refroidi 10 en contact avec le corps tubulaire 2 a une géométrie très légèrement conique ayant pour effet d'augmenter le serrage de l'extrémité du corps tubulaire 2 contre le guide refroidi 10.

Selon des modes d'exécution de l'invention, le refroidissement actif pendant l'étape C délivre une puissance de refroidissement supérieure à 50W et de préférence supérieure à 200W.

Selon des modes d'exécution de l'invention, la surface refroidie 15 du corps tubulaire 2 est supérieure ou égale à la surface chauffée 16 du corps tubulaire 2.

Selon des modes d'exécution de l'invention, le rapport entre la surface refroidie 15 et la surface chauffée 16 est supérieure à 1, de préférence supérieure à 1,2 et avantageusement supérieure à 1,5.

Selon d'autres modes d'exécution de l'invention, la surface externe 15 du corps tubulaire 2 est refroidie activement avec un gaz, préférentiellement avec un jet d'air.

Selon d'autres modes d'exécution de l'invention, le refroidissement actif de la surface externe 15 du corps tubulaire 2 est réalisé avec un jet d'air humide, ou contenant de petites particules d'eau en suspension.

Selon des modes d'exécution de l'invention, le refroidissement actif est régulé afin de pouvoir ajuster la puissance de refroidissement et garantir une constance dans le temps des soudures produites.

Selon l'invention, le chauffage de l'interface à souder du corps tubulaire 2 (face interne 16) conjointement au refroidissement actif de la surface externe 15 du corps tubulaire 2, permet de créer un gradient thermique maitrisé et ajustable dans l'épaisseur du corps tubulaire 2.

Selon des modes d'exécution de l'invention, l'ajustement de la puissance de refroidissement permet de modifier le gradient thermique dans l'épaisseur du corps tubulaire 2.

Selon des modes d'exécution de l'invention, à la fin de l'étape C, la différence de température entre la surface interne chauffée 16 et la surface externe refroidie 15 est supérieure à 100 degrés et de préférence supérieure à 150 degrés.

Selon des modes d'exécution de l'invention, à la fin de l'étape C, le gradient thermique moyen dans l'épaisseur du corps tubulaire chauffé est supérieur à 50°C/mm et de préférence supérieur à 100°C/mm.

Selon des modes d'exécution de l'invention, à la fin de l'étape C, au moins 50% de l'épaisseur du corps tubulaire 2 est fondue, et de préférence au moins 70% de l'épaisseur du corps tubulaire 2 est fondue.

Le passage de l'étape C à l'étape D peut se faire par indexage, c'est-à-dire passage d'une station à une autre ou dans la même station par remplacement des outils nécessaires. Lors de de l'indexage ou du changement des outils, on peut ajouter une étape de refroidissement actif de l'extrémité du corps tubulaire 2, par exemple au moyen d'injection d'air ou d'autres moyens équivalents.

### Etape D :

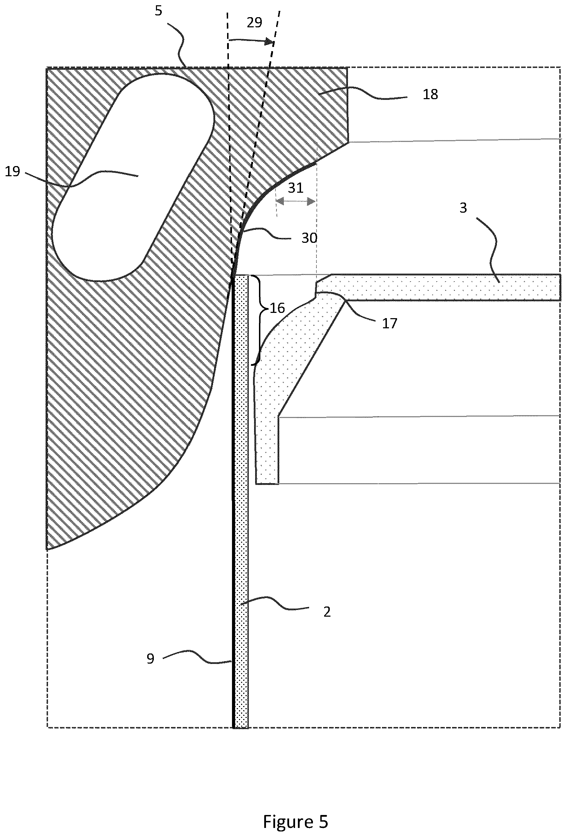

Un mode d'exécution illustratif des moyens utilisés pour réaliser l'étape D est représenté dans la figure 5.

Selon des modes d'exécution de l'invention, l'extrémité chauffée du corps tubulaire 2 peut être refroidie activement pendant la mise en contact des surfaces à souder du composant 3 et du corps tubulaire 2 afin de conserver le gradient thermique dans l'épaisseur de l'extrémité chauffée.

Selon des modes d'exécution de l'invention, la géométrie de l'extrémité chauffée du corps tubulaire 2 est modifiée pour permettre la mise en contact des surfaces à souder, ladite modification étant une réduction de la circonférence (par exemple du diamètre) de l'extrémité chauffée.

Selon des modes d'exécution de l'invention, la réduction de circonférence au niveau de l'extrémité chauffée du corps tubulaire 2 est supérieure à 1% et de préférence supérieure à 2% et avantageusement supérieure à 3%.

Selon des modes d'exécution de l'invention, le gradient thermique dans l'épaisseur du corps tubulaire 2 est ajusté dans l'étape D pour permettre une déformation du corps tubulaire 2 sans générer de défauts et en particulier pour ne pas dégrader l'aspect visuel de la couche externe 9.

Selon des modes d'exécution de l'invention, la température des moyens 18, 19 assurant le refroidissement actif de la couche externe 9 pendant l'étape D est régulée et ajustée. Le gradient thermique dans l'épaisseur de l'extrémité du corps tubulaire est maintenu en évitant ou limitant le réchauffement de la couche externe du corps tubulaire.

Selon des modes d'exécution de l'invention, la mise en contact des surfaces à souder est réalisée par l'intermédiaire d'une bague formage 18 dont le mouvement relatif par rapport au corps tubulaire 2 a pour effet de rabattre l'extrémité chauffée du corps tubulaire 2 (interface 14 dans la figure 4) contre la surface chauffée du composant 3 (interface 14' dans la figure 4).

Selon des modes d'exécution de l'invention, la température de la bague de formage 18 est régulée pour ajuster la température de la surface de formage 30 et optimiser le glissement sur celle-ci.

Selon un mode d'exécution préférentiel de l'invention, la bague de formage 18 est régulée par l'intermédiaire d'un circuit d'eau thermorégulée 19.

Selon des modes d'exécution de l'invention, la bague de formage 18 a un coefficient de conductivité thermique supérieur à 8W/(m.°K) et de préférence supérieur à 13W/(m.°K).

Selon des modes d'exécution de l'invention, la bague de formage 18 présente une surface de formage 30 qui entre en contact avec l'extrémité chauffée du corps tubulaire 2 lors de l'étape D. La surface de formage 30 est caractérisée par un angle de formage 29 variable ; l'angle de formage 29 étant observé dans un plan contenant l'axe 28 du corps tubulaire ; ledit angle de formage 29 étant défini par l'angle entre l'axe du corps tubulaire 28 et la tangente à la surface de formage 30, comme illustré dans la figure 5.

Selon des modes d'exécution de l'invention, l'angle de formage 29 augmente sans discontinuité lorsque le rayon diminue afin de rabattre progressivement l'extrémité du corps tubulaire 2.

Selon des modes d'exécution de l'invention, la surface de formage 30 présente au moins une partie dite linéaire 31 dans laquelle l'angle de formage est constant et compris entre 35 et 90 degrés et de préférence entre 45 et 85 degrés.

Selon des modes d'exécution de l'invention, la partie linéaire représente au moins 5% de la surface de formage 30 et de préférence au moins 15% de la surface de formage 30.

Selon un mode d'exécution préférentiel, le déplacement relatif entre la bague de formage 18 et le corps tubulaire 2 s'effectue selon l'axe 28 du corps tubulaire 2.

Selon ce mode d'exécution préférentiel, la surface de formage 30 conjuguée au déplacement relatif a pour effet de rabattre l'extrémité du corps tubulaire 2 contre le composant 3.

Selon ce mode d'exécution préférentiel, l'angle de formage 29 est compris entre 0 et 85 degrés et de préférence entre 5 et 80 degrés et avantageusement entre 10 et 75.

Selon d'autres modes d'exécution, la bague de formage 18 a un mouvement radial par rapport à l'axe du corps tubulaire 2. Selon ce mode d'exécution, la bague de formage 18 comprend plusieurs parties se déplaçant radialement.

Selon d'autres modes d'exécution, le mouvement relatif entre le corps tubulaire 2 et la bague de formage 18 conjugue un mouvement axial et un mouvement radial.

Selon des modes d'exécution de l'invention, la surface de formage 30 présente un faible coefficient de frottement pour permettre le glissement et la déformation du corps tubulaire 2 pendant l'étape D.

Selon des modes d'exécution de l'invention, la surface de formage 30 présente un coefficient de friction inférieur à 0,15, de préférence inférieur à 0,1. Le faible coefficient de friction et le gradient thermique dans le corps tubulaire 2 permettent de déformer l'extrémité chauffée du corps tubulaire 2 sans générer de défauts sur la face externe du corps tubulaire 2, en particulier si cette dernière est décorée (par exemple au moyen d'un film décor).

Selon des modes d'exécution de l'invention, la bague de formage 18 utilise le principe du coussin d'air pour diminuer la friction avec le corps tubulaire 2. Avantageusement, la surface de formage 30 présente des petits trous par lesquels de l'air est alimenté sous pression afin de créer ce coussin d'air et diminuer la friction entre le corps tubulaire 2 et la surface de formage 30.

### Etape E :

Selon des modes d'exécution de l'invention, une pression est appliquée sur la soudure afin de comprimer le corps tubulaire 2 et assurer une bonne cohésion à l'interface soudée.

Selon des modes d'exécution de l'invention, l'étape de mise en pression de la soudure permet de former un bourrelet 22 de matière à l'extrémité du corps tubulaire 2; ledit bourrelet 22 étant formé par l'écoulement des couches fondues du corps tubulaire 2.

Selon des modes d'exécution de l'invention, la couche externe 9 du corps tubulaire 2 ne s'écoule pas comme elle est refroidie au moins lors de l'opération de chauffage (étape C du procédé); la matière formant ladite couche 9 n'est donc pas présente dans le bourrelet 22. En empêchant la couche externe 9 de s'écouler, l'invention permet d'éviter l'apparition de défauts visuels au niveau de la soudure qui seraient créés par ladite couche externe 9.

Selon un mode d'exécution optionnel, la couche externe 9 est refroidie activement pendant l'étape de mise en pression de la soudure afin de maintenir le gradient thermique dans l'extrémité du corps tubulaire et éviter la déformation de la couche externe 9 pendant la formation du bourrelet.

Selon un mode d'exécution préférentiel de l'invention, la couche externe 9 ne s'écoule pas grâce au gradient thermique présent dans le corps tubulaire 2 au moment de l'étape de mise en pression.

Selon un autre mode d'exécution, la couche externe 9 du corps tubulaire 2 ne s'écoule pas parce qu'elle est maintenue activement en position pendant l'étape de mise en pression E.

Selon un autre mode d'exécution, la couche externe 9 ne s'écoule pas grâce au gradient thermique présent dans le corps tubulaire 2 et parce qu'elle est maintenue activement pendant l'étape de compression.

Un premier mode d'exécution de moyen pour maintenir activement la couche externe 9 consiste à utiliser une bague de mise en pression ayant une surface avec un coefficient de frottement élevé supérieur à 0,5 et de préférence supérieur à 1.

Un deuxième mode d'exécution de moyen pour maintenir activement la couche externe 9 consiste maintenir la surface externe 15 du corps tubulaire 2 par aspiration (dépression). Avantageusement, la surface de mise en pression présente des petits trous par lesquels une dépression afin de bloquer la couche externe 9 du corps tubulaire 2.

Selon des modes d'exécution de l'invention, la couche externe 9 du corps tubulaire 2 qui ne s'écoule pas pendant l'étape de mise en pression représente moins de 50% de l'épaisseur du corps tubulaire 2, de préférence moins de 30% de l'épaisseur du corps tubulaire 2.

Selon des modes d'exécution de l'invention, le bourrelet 22 permet de garantir que le corps tubulaire 2 a été correctement chauffé lors de l'opération de soudage.

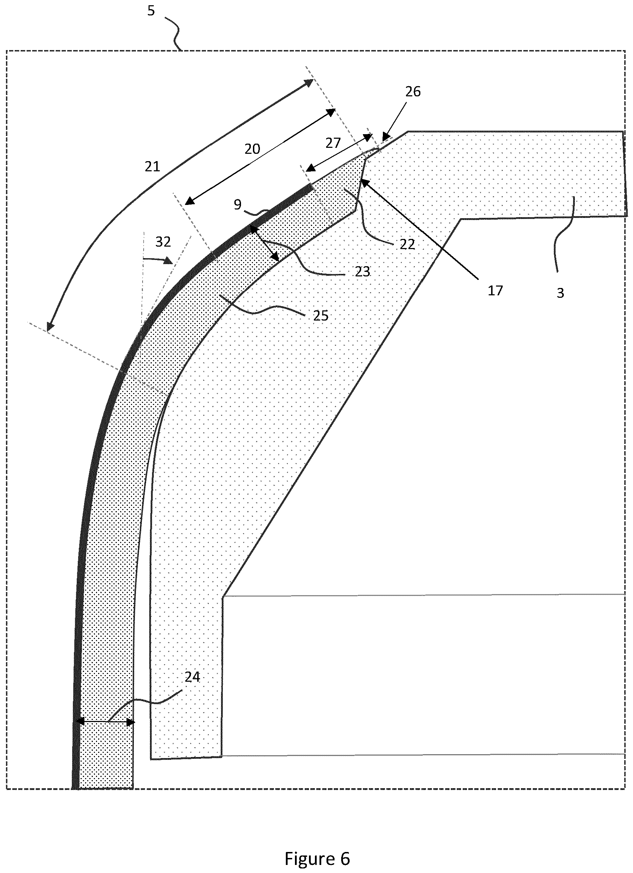

Selon des modes d'exécution de l'invention, le bourrelet 22 est en partie encastré dans l'assemblage afin d'éviter de créer une rupture de la surface à l'extrémité de la soudure comme illustré en figure 6.

Selon des modes d'exécution de l'invention, au moins 80% de l'épaisseur du bourrelet 22 est encastrée et de préférence au moins 90% de l'épaisseur.

Selon des modes d'exécution de l'invention, l'étape de mise en pression E permet conjointement de refroidir au moins partiellement la soudure.

Selon des modes d'exécution de l'invention, la surface externe 15 du corps tubulaire 2 est refroidie activement lors de l'étape de mise en pression E.

Selon des modes d'exécution de l'invention, le refroidissement actif pendant l'étape de mise en pression E délivre une puissance de refroidissement supérieure à 50W et de préférence supérieure à 100W.

Selon des modes d'exécution de l'invention, l'épaisseur du corps tubulaire 2 est comprimée localement au moins de 1% et de préférence d'au moins de 5% au niveau de la soudure.

Selon un mode d'exécution préférentiel de l'invention, l'étape de mise en pression est réalisée par l'intermédiaire de la bague de formage 18 ayant servi à la mise contact des surfaces à souder (étape D)

Selon un autre mode d'exécution, l'étape de mise en pression est réalisée par l'intermédiaire d'une bague de mise en pression ; la géométrie de la bague de mise en pression pouvant être différente de celle de la bague de formage 18.

Selon des modes d'exécution de l'invention, la surface externe 15 du corps tubulaire 2 est refroidie activement lors de l'étape de mise en pression E. Le refroidissement actif permet de bloquer la couche externe 9 du corps tubulaire pendant la compression de la soudure et éviter l'apparition de défauts en surface.

Selon un mode d'exécution préférentiel de l'invention, le refroidissement actif lors de l'étape de mise en pression E est réalisé par contact de la surface externe 15 du corps tubulaire contre la bague de formage 18. La bague de formage 18 est refroidie par un circuit d'eau thermorégulée 19, par exemple.

Selon un mode d'exécution préférentiel de l'invention, la soudure comprimée est maintenue en contact avec la bague de mise en pression afin de refroidir la soudure.

Selon un mode d'exécution alternatif, la soudure est refroidie par convexion forcée avec de l'air.

Dans des modes d'exécution, l'invention concerne un emballage comprenant au moins un corps tubulaire 2 flexible lié par une soudure à un composant 3 et dont la soudure 4 ne comporte pas sur sa face externe de défauts visuels d'ordre esthétique. Un exemple d'emballage 1 est illustré dans la figure 1 et un détail de la zone d'assemblage 5 est illustré dans la figure 6.

Selon un mode d'exécution préférentiel, le corps tubulaire 2 ne comporte pas de soudure latérale car il est fabriqué par extrusion, ou par extrusion étiquetage, ou encore par injection.

Selon des modes d'exécution de l'invention, le corps tubulaire 2 est décoré dans la zone de soudure avec le composant 3.

Selon des modes d'exécution de l'invention, le corps tubulaire 2 est « monomatière » ou/et d'épaisseur réduite. De préférence l'épaisseur du corps tubulaire 2 est inférieure à 450 microns et avantageusement inférieure à 350 microns.

Selon d'autres modes d'exécution de l'invention, le corps tubulaire 2 ou/et le composant 3 comprend (comprennent) de la matière recyclée ou/et biodégradable et ou biosourcée. Préférentiellement, dans le corps tubulaire 2 le taux de matière recyclée ou/et biodégradable et ou biosourcée est supérieur à 10% et avantageusement supérieur à 30%.

Selon des modes d'exécution de l'invention, la soudure entre le composant 3 et le corps tubulaire 2 présente un bourrelet 22 de matière dépassant l'extrémité de la couche externe 9 du corps tubulaire 2 et provenant en partie des couches situées sous ladite couche externe 9.

Selon des modes d'exécution de l'invention, le bourrelet 22 est encastré dans la soudure. Préférentiellement plus de 60% de l'épaisseur du bourrelet 22 est encastrée, avantageusement plus de 80% et idéalement plus de 95%.

Selon des modes d'exécution de l'invention, l'épaisseur du corps tubulaire 2 est comprimée localement au niveau de la soudure, au moins de 1% et de préférence au moins de 5%, c'est-à-dire que l'épaisseur après compression vaut 99%, respectivement 95%, de l'épaisseur avant compression.

Selon des modes d'exécution de l'invention, la surface externe de la soudure est caractérisée par un angle de soudage 32 variable ; l'angle de soudage 32 étant observé dans un plan contenant l'axe 28 du corps tubulaire ; ledit angle de soudage 32 étant défini par l'angle entre l'axe du corps tubulaire 2 et la tangente à la surface externe de la soudure.

Selon des modes d'exécution de l'invention l'angle de soudage 32 augmente sans discontinuité lorsque le rayon diminue.

Selon des modes d'exécution de l'invention, l'angle de soudage 32 est compris 0 et 90 degrés et de préférence entre 5 et 85 degrés et avantageusement entre 10 et 80.

Selon des modes d'exécution de l'invention, la surface externe de la soudure présente au moins une partie dite linéaire 20 dans laquelle l'angle de soudage 32 est constant et il est compris entre 35 et 85 degrés et de préférence entre 45 et 80 degrés.

Selon des modes d'exécution de l'invention, la surface linéaire 20 représente au moins 5% de la surface soudée 21, et de préférence au moins 15%.

Selon des modes d'exécution de l'invention, la longueur du bourrelet 22 visible en surface 27 est supérieure à 1% et de la longueur de soudure 21 et de préférence supérieure à 5%.

Selon des modes d'exécution de l'invention, le bourrelet 22 est en surface sur toute la circonférence de la soudure.

Selon un mode d'exécution de l'invention, la couleur du bourrelet 22 est identique à la couleur du composant 2 afin de le rendre difficilement visible à l'œil nu.

Selon un autre mode d'exécution de l'invention, la couleur du bourrelet 22 est identique à la couleur de la couche externe 9 du corps tubulaire afin de le rendre difficilement visible à l'oeil nu.

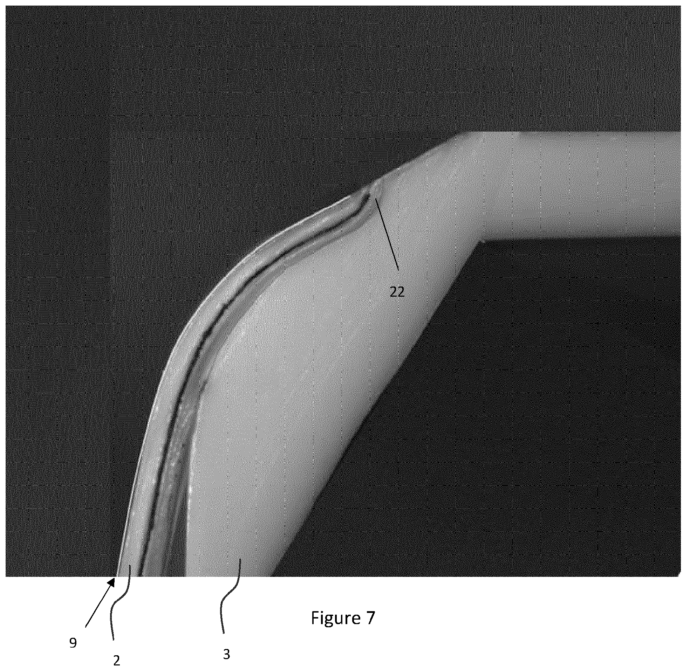

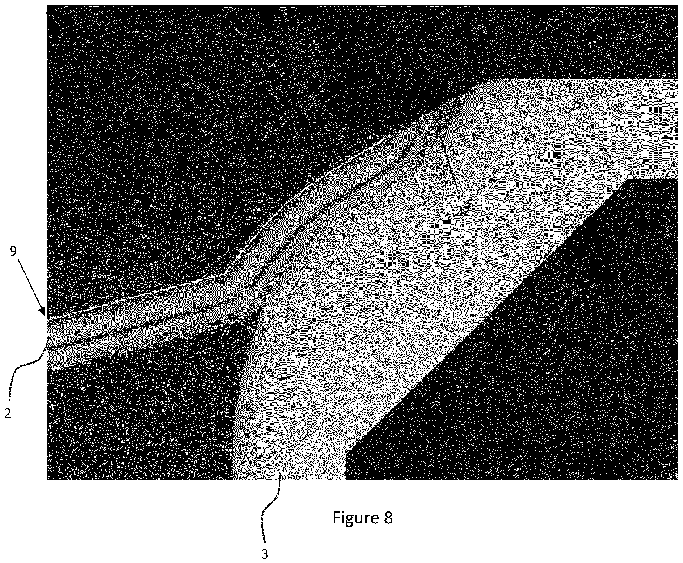

Les figures 7 et 8 illustrent des vues au microscope de soudures réalisées selon l'invention.

Des modes d'exécution ont été décrits pour fournir une compréhension globale des principes de la structure, de la fonction, de la fabrication et de l'utilisation des systèmes et procédés décrits dans la présente demande. Plusieurs de ces modes de réalisation sont illustrés dans les dessins annexés et décrits ci-dessus. Les systèmes et procédés spécifiquement décrits dans la présente demande et illustrés dans les dessins annexés sont des modes d'exécution non limitatifs de la portée de la présente invention. Les caractéristiques illustrées ou décrites en relation avec un mode d'exécution peuvent être combinées avec les caractéristiques d'autres modes d'exécution. De telles modifications et variantes sont destinées à être incluses dans la portée de la présente invention. Un certain nombre de problèmes avec les procédés et systèmes conventionnels sont notés ici et les procédés et systèmes décrits ici peuvent résoudre un ou plusieurs de ces problèmes. De plus, alors que cette invention a été décrite conjointement avec un certain nombre de modes d'exécution, les alternatives, modifications, équivalents et variantes qui sont dans l'esprit et la portée de la présente invention sont également couvertes par la présente demande.

## Revendications

1. Procédé de fabrication d'un emballage tubulaire par soudage de l'extrémité d'un corps tubulaire avec un composant, ledit composant pouvant être une épaule, un bouchon, ou un fond, ledit procédé comprenant au moins les étapes suivantes:
A. Alimentation avec un composant;
B. Alimentation avec un corps tubulaire;
C. Chauffage de l'interface à souder du composant et du corps tubulaire;
D. Mise en position des zones à souder;
E. Mise en pression et refroidissement de la soudure;
ledit procédé étant **caractérisé par le fait que**
au moins lors du chauffage de l'interface, on refroidit activement la face externe de la zone à souder du corps tubulaire de sorte qu'un gradient thermique est créé dans l'épaisseur du corps tubulaire lors de l'étape C ;
la couche en surface du corps tubulaire ne s'écoule pas lors de l'étape E et un bourrelet de matière provenant du corps tubulaire est formé à l'extrémité de la couche en surface, ledit bourrelet étant encastré et présent en surface de la soudure.

2. Procédé selon la revendication 1, dans lequel au moins le corps tubulaire est fabriqué par extrusion, extrusion-étiquetage ou injection.

3. Procédé selon la revendication 1 ou 2, dans lequel on refroidit activement la face externe de la zone à souder du corps tubulaire pendant l'étape D de mise en position des zones à souder pour maintenir un gradient thermique dans l'épaisseur du corps tubulaire et éviter la création de défauts dans la couche externe du corps tubulaire.

4. Procédé selon l'une des revendications 1 à 3, dans lequel on refroidit activement la face externe de la zone à souder du corps tubulaire pendant l'étape E de mise en pression de la soudure pour maintenir un gradient thermique dans l'épaisseur du corps tubulaire et éviter la déformation de la couche externe du corps tubulaire.

5. Procédé selon l'une des revendications précédentes, dans lequel on refroidit activement la face externe de la zone à souder du corps tubulaire après l'étape F de mise en pression de la soudure.

6. Procédé selon l'une des revendications précédentes, dans lequel la mise en position comprend le rabat de l'extrémité chauffée du corps tubulaire contre le composant au moyen d'une surface de formage ayant un angle de formage compris entre 0 et 85 degrés.

7. Procédé selon l'une des revendications précédentes, dans lequel la surface de formage présente au moins une partie dite linéaire dans laquelle l'angle de formage est constant et est compris entre 35 et 85 degrés.

8. Procédé selon la revendication précédente, dans lequel la surface linéaire représente au moins 5% de la surface de formage.

9. Emballage flexible (1) comprenant au moins un corps tubulaire (2) et un composant (3) pouvant être une épaule de tube ou un fond ou un système de fermeture, l'extrémité du corps tubulaire étant reliée par une soudure (4) à la périphérie du composant, ledit emballage étant **caractérisé par le fait que** ladite soudure (4) :
- présente un bourrelet (22) situé à l'extrémité de la couche externe (9) du corps tubulaire (2) et formé de matière provenant des couches du corps tubulaire situées sous ladite couche externe
- le bourrelet (22) est au moins en partie encastré.

10. Emballage flexible (1) selon la revendication 9, dans lequel au moins le corps tubulaire (2) est formé par extrusion, extrusion-étiquetage ou injection,

11. Emballage (1) selon la revendication 9 ou 10, dans lequel plus de 60% de l'épaisseur du bourrelet (22) est encastrée.

12. Emballage (1) selon l'une des revendications 9 à 11, dans lequel l'épaisseur du corps tubulaire (2) est comprimée localement au niveau de la soudure, au moins de 1% et de préférence au moins de 5%.

13. Emballage (1) selon l'une des revendication 9 à 12, dans lequel la surface externe de la soudure est **caractérisée par** un angle de soudage (32) variable ; l'angle de soudage (32) étant observé dans un plan contenant l'axe (28) du corps tubulaire, ledit angle de soudage (32) étant défini par l'angle entre l'axe du corps tubulaire (2) et la tangente à la surface externe de la soudure.

14. Emballage (1) selon la revendication précédente, dans lequel l'angle de soudage (32) est compris entre 0 et environ 85 degrés.

15. Emballage (1) selon l'une des revendication 9 à 14, dans lequel la surface externe (21) de la soudure présente au moins une partie dite linéaire (20) dans laquelle l'angle de soudage est constant et est compris entre 35 et 85 degrés.

16. Emballage (1) selon l'une des revendication 9 à 15, dans lequel la surface linéaire (20) représente au moins 5% de la surface soudée (21).

17. Emballage (1) selon l'une des revendication 9 à 16, dans lequel la longueur du bourrelet (22) visible en surface (27) est supérieure à 1% et de la longueur de soudure (21).

18. Emballage (1) selon l'une des revendication 9 à 17, dans lequel le bourrelet (22) est en surface sur toute la circonférence de la soudure.

19. Emballage (1) selon l'une des revendication 9 à 18, dans lequel la couleur du bourrelet (22) est identique à la couleur du composant (2) et/ou identique à la couleur de la couche externe (9) du corps tubulaire afin de le rendre difficilement visible à l'oeil nu.

20. Emballage (1) selon l'une des revendications 9 à 19, dans lequel l'épaisseur du corps tubulaire (2) est inférieure à 450 microns.

21. Emballage (1) selon l'une des revendications 9 à 20, dans lequel le corps tubulaire (2) ou/et le composant (3) comprend (comprennent) de la matière recyclée ou/et biodégradable et ou biosourcée.

22. Emballage (1) selon la revendication précédente, dans lequel le taux de matière recyclée ou/et biodégradable et ou biosourcée est supérieur à 10% et avantageusement supérieur à 30%.
